# EUROPÄISCHE PATENTANMELDUNG

(11) **EP 0 854 021 A2**
(43) Veröffentlichungstag der Anmeldung: **22.07.1998**
(21) Anmeldenummer: 98100695.0
(22) Anmeldetag: 16.01.1998
(51) Int. Cl.: B26D 3/24

(54) **Vorrichtung zum Zerteilen eines Käselaibes**

(30) Priorität: 18.01.1997 DE 29700852 U
(71) Anmelder: Topp, Burkhard, D-58239 Schwerte (DE); Dott, Gerd-Dieter, 56566 Neuwied (DE)
(72) Erfinder: Topp, Burkhard, D-58239 Schwerte (DE); Dott, Gerd-Dieter, 56566 Neuwied (DE)
(74) Vertreter: Patentanwälte Meinke, Dabringhaus und Partner

(57) **Zusammenfassung**

Mit einer Vorrichtung zum Zerteilen eines Käselaibes od. dgl. mit einem das gewünschte Zerteilungsmuster des Käses aufweisenden Messer (2) mit einer Mehrzahl von das Schnittmuster bildenden, geraden Schneidklingen (3) und einem dem Schneidklingenmuster angepaßten, den Käselaib aufnehmenden Vorschubelement, wobei die Schneidklingen (3) einen von 90° verschiedenen Winkel relativ zur Schneidrichtung aufweisen, soll eine Lösung geschaffen werden, mit der die Schneidleistungen und Schneidergebnisse insbesondere bei Käselaiben noch verbessert werden.

Dies wird dadurch erreicht, daß die Schneidklingen (3',3") abwechselnd von außen (7) nach innen (9a) und von innen (9a) nach außen (7) geneigt angeordnet sind.

## Beschreibung

Die Erfindung richtet sich auf eine Vorrichtung zum Zerteilen eines Käselaibes od. dgl. mit einem das gewünschte Zerteilungsmuster des Käses aufweisenden Messer mit einer Mehrzahl von das Schnittmuster bildenden, geraden Schneidklingen und einem dem Schneidklingenmuster angepaßten, den Käselaib aufnehmenden Vorschubelement, wobei die Schneidklingen einen von 90° verschiedenen Winkel relativ zur Schneidrichtung aufweisen.

Eine derartige Vorrichtung ist z.B. aus der EP-0 144 513-B1 oder der EP-0 536 507-B1 bekannt. Bei der bekannten Lösung nach der EP-0 144 513 wird ein Käselaib über Vorschubelemente, dort von unten nach oben durch ein feststehendes Schneidmesser mit einer Mehrzahl von Klingen geführt, wobei dort u.a. auch Klingen vorgesehen sind, die sichel- oder bogenförmig gestaltet sind oder eine Vielzahl spitzer Zähne aufweisen. Zwei Vorrichtungen zum Schneiden von Torten mit schräggestellten Messerklingen zeigen die DE-81 34 686-U1 und DE-93 10 273-U1.

Aufgabe der Erfindung ist die Schaffung einer Lösung, mit der die Schneidleistungen und Schneidergebnisse insbesondere bei Käselaiben noch verbessert werden.

Bei einer Vorrichtung der eingangs bezeichneten Art wird diese Aufgabe gemäß der Erfindung dadurch gelöst, daß die Schneidklingen abwechselnd von außen nach innen und von innen nach außen geneigt angeordnet sind.

Mit der Erfindung wird erreicht, daß der Einsatz der Schneidklinge in die vergleichsweise harten Krusten oder Schalen der Ränder punktförmig erfolgt, die Käserinde wird an unterschiedlichen Stellen belastet, so daß optimale Schneidergebnisse erreicht werden.

In Ausgestaltung ist vorgesehen, daß die Mehrzahl der Schneidklingen V-förmig gestaltet ist mit unterschiedlich langen V-Schenkeln.

Bei einer erfindungsgemäßen Vorrichtung ist es beispielsweise möglich, ein Schneidmesser zu gestalten, das in der Lage ist, einen Käselaib am äußeren Umfang in mehr als dreißig Stücke zu zerteilen. In einem solchen Falle ist ein Messer so gestaltet, daß neben einen den Kern des Käses ausstanzenden Teil speichenartig nach innen geführte Klingen vorgesehen sind, z.B. dreißig an der Zahl, wobei eine Klinge vom Außenrahmen des Messers zum Kern hin geneigt angeordnet ist und die Nachbarklinge dann umgekehrt zum Außenrahmen hin geneigt im Messer angeordnet ist.

Um das Schneidergebnis weiter zu verbessern, ist nach der Erfindung auch vorgesehen, daß die Oberfläche der Vorschubelemente muldenförmig ausgebildet ist. Diese muldenförmige Ausbildung bewirkt, daß der Käselaib, den es zu zerteilen gilt, in der Mulde verschiebungsfrei positioniert ist, daß er insbesondere bei Beginn des Schneidvorganges nicht ausweichen kann. Auch gewährleistet eine solche Muldenführung einen besseren Verteilungsschnitt während des Vorschubes des Käses durch das Messer bzw. dessen Schneidklingen hindurch.

In Ausgestaltung ist dabei vorgesehen, daß die den Rand des Käselaibes aufnehmenden Vorschubelemente nach oben in Schneidrichtung weisende Führungsansätze aufweisen mit einer im wesentlichen der Form des Käses angepaßten, gewölbten Oberfläche.

Weitere Merkmale, Einzelheiten und Vorteile der Erfindung ergeben sich aufgrund der nachfolgenden Beschreibung sowie anhand der Zeichnung. Diese zeigt in
Fig. 1 eine Aufsicht auf ein erfindungsgemäßes Messer,
Fig. 2 einen Schnitt etwa gemäß Pfeil II-II in Fig. 1,
Fig. 3 einen Schnitt etwa Linie III-III in Fig. 1,
Fig. 3a ein abgewandeltes Ausführungsbeispiel einer Messergestaltung,
Fig. 4 die Aufsicht auf ein zum Messer nach Fig. 1 passendes Vorschubelement sowie in
Fig. 5 einen Schnitt etwa nach Linie V in Fig. 4.

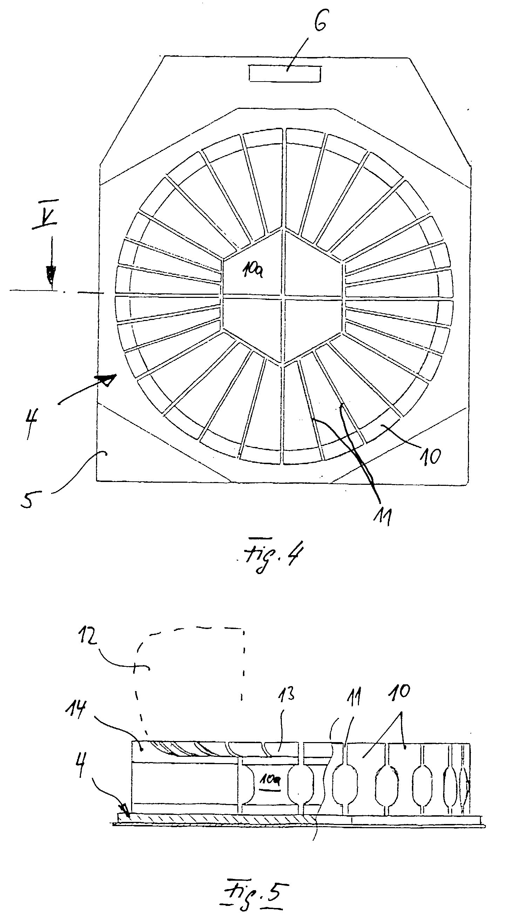

Die allgemein mit 1 bezeichnete Vorrichtung wird im wesentlichen von einem Messer 2 mit einer Vielzahl von Schneidklingen 3 und einem Vorschubelement 4 (Fig. 4, 5) gebildet, wobei dem Benutzer einer entsprechenden Käsezerteilmaschine als Kassette Vorschubelement 4 und Messer 2 auf einem schubfachartig in die Maschine einführbaren Tischelement 5 zur Verfügung gestellt wird. Das Tischelement 5 ist mit einem Handgriff 6 zur leichteren Handhabung versehen.

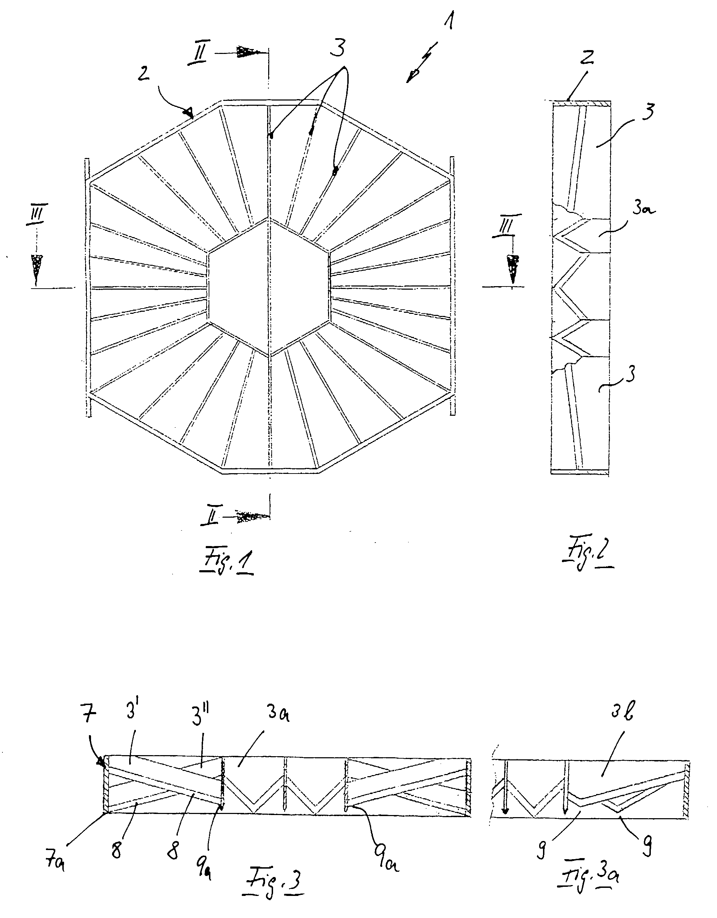

Wie sich insbesondere aus den Fig. 1 bis 3 ergibt, sind die Schneidklingen 3 im dargestellten Beispiel etwa speichenförmig vom Rand 7 des Messers zu Innenmessern 3a geneigt angeordnet, wobei die Neigung benachbarter Messer gegenläufig ausgebildet sein kann, wie sich dies aus Fig. 3 ergibt. Das Messer 3' ist von außen vom Rand 7 nach innen geneigt, während das dahinter liegende Messer 3" vom Rand ansteigend zum Inneren hin angeordnet ist.

Die Schneidkanten 8 der Messer können in besonderer Weise beschichtet sein oder mit einer Schneidkeramik versehen sein, was nicht näher dargestellt ist. Sie können insbesondere auch querschnittlich so gestaltet sein, daß das sich anschließende Messerblatt schmaler ausgeführt ist als die Klinge im Bereich 8.

Die innen liegenden Messer 3a können haifischzahnähnlich bzw. V-förmig profiliert sein, wie sich dies aus Fig. 3 ergibt. Aber auch die außen liegenden Messer, in Fig. 3a mit 3b bezeichnet, können V-förmig gestaltet sein, wobei die jeweiligen Spitzen 9 benachbarter Messer gegeneinander versetzt sind und in der Höhe unterschiedlich sind. Dabei ist erfindungsgemäß dafür Sorge getragen, daß die Eindringspitzen 9 bzw. die Klingenanfänge 9a hinter den in Fig. 3 mit 7a bezeichneten unteren Rahmenrand zurückstehen, um bei der Lagerhaltung und/oder bei Reinigungsvorgängen nicht beschädigt zu werden.

Das Vorschubelement 4 ist beispielsweise aus einem physiologisch unbedenklichen Kunststoff gefertigt und weist eine Vielzahl von Segmenten 10 auf, die der Gestaltung des Messers 2 derart angepaßt sind, daß die Klingen 3 in entsprechende Spalte 11 eintreten können, wobei die Tiefe der Spalte 11 größer ist als die Höhe des Messers 2, so daß ein auf dem Vorschubelement 4 liegender Käse durch das Messer 2 hindurch nach oben angehoben werden kann.

Zur besseren Führung eines aufgelegten Käselaibes, in Fig. 5 gestrichelt angedeutet und mit 12 bezeichnet, weisen die Vorschubelemente 10 eine muldenförmige Oberfläche 13 auf, in die der Käselaib 12 eingebettet werden kann. Insbesondere die den Außenrand des Käselaibes 12 aufnehmenden Vorschubelemente weisen nach oben in Schneidrichtung weisende Führungsansätze 14 auf, während die innen liegenden Vorschubelemente 10a eine gerade, den Muldenboden bildende Oberfläche aufweisen.

Natürlich ist das beschriebene Ausführungsbeispiel der Erfindung noch in vielfacher Hinsicht abzuändern, ohne den Grundgedanken zu verlassen. So ist die Erfindung insbesondere und ausdrücklich nicht auf die dargestellte Messergestaltung eingeschränkt, hier können auch andere Messerformen, d.h. andere Schnittmuster, vorgesehen sein.

## Patentansprüche

1. Vorrichtung zum Zerteilen eines Käselaibes od. dgl. mit einem das gewünschte Zerteilungsmuster des Käses aufweisenden Messer mit einer Mehrzahl von das Schnittmuster bildenden, geraden Schneidklingen und einem dem Schneidklingenmuster angepaßten, den Käselaib aufnehmenden Vorschubelement, wobei die Schneidklingen einen von 90° verschiedenen Winkel relativ zur Schneidrichtung aufweisen,
dadurch gekennzeichnet,
daß die Schneidklingen (3',3") abwechselnd von außen nach innen und von innen nach außen geneigt angeordnet sind.

2. Vorrichtung nach Anspruch 1,
dadurch gekennzeichnet,
daß die Mehrzahl der Schneidklingen (3b) V-förmig gestaltet ist mit unterschiedlich langen V-Schenkeln (Fig. 3a).

3. Vorrichtung nach Anspruch 1 oder 2,
dadurch gekennzeichnet,
daß die Schneidmesser (3a) einen Kernbereich ausschneiden, wobei die den Kern ausschneidenden bzw. teilenden Messer (3a) eine V-förmige Klingengestaltung aufweisen.

4. Vorrichtung nach Anspruch 1 oder einem der folgenden,
dadurch gekennzeichnet,
daß die beim Schneidvorgang zuerst mit der Käselaib-Oberfläche in Berührung kommenden Schneidspitzen (9) bzw. Klingenanfänge (9a) relativ zueinander in bezug auf die Schneidebene unterschiedliche Lage- und/oder Höhe-Positionen aufweisen.

5. Vorrichtung nach Anspruch 1 oder einem der folgenden,
dadurch gekennzeichnet,
daß die Schneidklingen (3) eine das Anhaften der Käsemasse verhindernde Oberflächenstruktur aufweisen.

6. Vorrichtung nach Anspruch 1 oder einem der folgenden,
dadurch gekennzeichnet,
daß die Oberfläche (13) der Vorschubelemente (10) muldenförmig ausgebildet ist.

7. Vorrichtung nach Anspruch 1 oder einem der folgenden,
dadurch gekennzeichnet,
daß die den Rand des Käselaibes aufnehmenden Vorschubelemente (10) nach oben in Schneidrichtung weisende Führungsansätze (14) aufweisen mit einer im wesentlichen der Form des Käses angepaßten, gewölbten Oberfläche.
